# EUROPÄISCHE PATENTANMELDUNG

(11) **EP 1 902 800 A1**
(43) Veröffentlichungstag der Anmeldung: **26.03.2008**
(21) Anmeldenummer: 06019630.0
(22) Anmeldetag: 20.09.2006
(51) Int. Cl.: B23B 31/26, B23Q 1/70

(54) **Motorspindel zum Drehantrieb von Werkzeugen an einer Werkzeugmaschine**

(71) Anmelder: Maschinenfabrik Berthold Hermle Aktiengesellschaft, D-78559 Gosheim (DE)
(72) Erfinder: Bernhard, Franz-Xaver, 78549 Spaichingen (DE); Schwörer, Tobias, Dipl.-Ing., 78598 Königsheim (DE)
(74) Vertreter: Vetter, Hans

(57) **Zusammenfassung**

Es wird eine Motorspindel zum Drehantrieb von Werkzeugen an einer Werkzeugmaschine vorgeschlagen, die einen eine Motorwelle (18) aufweisenden Spindelmotor (11) und eine von dieser angetriebenen, eine Werkzeugspanneinrichtung (14) aufweisenden Spindelwelle (13) besitzt. Von der Werkzeugspanneinrichtung (14) aus erstreckt sich durch die Spindelwelle (13) und die Motorwelle (18) hindurch eine darin axial verschiebbare Zugstange (36) der Werkzeugspanneinrichtung (14) zum Festspannen von Werkzeugen oder Werkzeugaufnahmen (15). Die Motorwelle (18) ist unabhängig von der Spindelwelle (13) in einem Motorgehäuse (10) und die Spindelwelle (13) unabhängig von der Motorwelle (18) in einem Spindelgehäuse (12) drehbar gelagert, das lösbar am Motorgehäuse (10) befestigt ist. Die Spindelwelle (13) ist in Drehrichtung formschlüssig, jedoch axial frei verschiebbar mit der Motorwelle (18) gekoppelt. Das Spindelgehäuse (12) bildet eine Baueinheit mit der Werkzeugspanneinrichtung (14) und deren Zugstange (36), wobei diese Zugstange frei verschiebbar in der Motorwelle (18) angeordnet ist, sodass diese gesamte Baueinheit abgenommen werden kann, ohne dass der Spindelmotor oder dessen Lagerung in irgendeiner Weise beeinträchtigt oder zu demontieren wäre.

## Beschreibung

Die Erfindung betrifft eine Motorspindel zum Drehantrieb von Werkzeugen an einer Werkzeugmaschine, mit einem eine Motorwelle aufweisenden Spindelmotor und einer von dieser angetriebenen, eine Werkzeugspanneinrichtung besitzenden Spindelwelle und mit einer sich von der Werkzeugspanneinrichtung aus durch die Spindelwelle und die Motorwelle hindurch erstreckenden und darin axial verschiebbaren Zugstange der Werkzeugspanneinrichtung zum Festspannen von Werkzeugen oder Werkzeugaufnahmen.

Bei einer derartigen, aus der DE 202005018002 U1 bekannten modularen Motorspindel mit innerer Kühlmittelzufuhr ist die Motorwelle identisch mit der Spindelwelle, das heißt, die Motorwelle trägt auch die Werkzeugspanneinrichtung für die jeweilige Werkzeugaufnahme. Diese Motorspindel kann zwar vor Ort demontiert werden, jedoch muss dazu zwangsläufig der Antriebsmotor mit der gesamten Motorlagerung mitdemontiert werden. Diese Vorgehensweise einer solchen kompletten Demontage des Motors vor Ort hat sich in der Praxis allerdings als sehr nachteilig erwiesen. Eine komplette Demontage des Motors mit den Motorlagern muss in der Regel unter genau definierten Montagebedingungen erfolgen, um Verschmutzungen an den hochgenauen Motorlagern zu vermeiden. Die Wuchtgüte des Motors wird beim Wiedereinbau in der Regel beeinträchtigt, wodurch das Gesamtsystem eventuell neu ausgewuchtet werden muss. Diese Montagebedingungen können vor Ort in der Regel nicht realisiert werden, sodass in der Praxis eine Demontage eines solchen Spindelmotors nur sinnvoll beim Hersteller durchgeführt werden kann.

Eine weitere Motorspindel der eingangs genannten Gattung ist aus der DE 10240737 A1 bekannt. Diese Motorspindel besitzt ebenfalls eine innere Kühlmittelzufuhr, weist jedoch eine zweiteilige Antriebswelle auf. Die beiden Wellenteile, also Motorwelle und Spindelwelle, sind jedoch nicht getrennt gelagert, sondern die Motorwelle ist an einer Seite mittels Schrauben an der Spindelwelle fixiert und über diese gelagert Die beiden Wellenabschnitte müssen daher im zusammengebauten Zustand kraft- und formschlüssig miteinander verbunden sein und in ihrer relativen Axialposition gehalten werden, um eine exakte Lagerung zu erreichen. Beim Lösen der Spindelwelle von der Motorwelle ist die Motorwelle einseitig nicht mehr gelagert und muss beim Zusammenbau im Hinblick auf die auftretenden hohen Drehzahlen neu justiert und ausgewuchtet werden. Dies bedeutet, dass eine Demontage und Neumontage vor Ort in der Praxis nicht durchführbar ist. Weiterhin enthält diese Druckschrift keinerlei Hinweise, dass die Werkzeugspanneinrichtung, insbesondere deren Zugstange, einen Teil des Spindelwellenabschnittes bildet und zusammen mit diesem demontiert werden kann.

Eine Aufgabe der vorliegenden Erfindung besteht darin, eine Motorspindel der eingangs genannten Gattung so auszubilden, dass eine einfache Demontage der Werkzeugspanneinrichtung zusammen mit der Spindelwelle so durchgeführt werden kann, dass die Lagerung der Motorwelle unbeeinträchtigt bleibt und der Spindelmotor selbst in keiner Weise demontiert werden muss.

Diese Aufgabe wird erfindungsgemäß durch eine Motorspindel mit den Merkmalen des Anspruchs 1 gelöst.

Die Vorteile der erfindungsgemäßen Motorspindel bestehen insbesondere darin, dass durch den modularen Aufbau, also die separate Lagerung von Motorwelle im Motorgehäuse und Spindelwelle im Spindelgehäuse und die axial frei verschiebbar mit der Motorwelle gekoppelte Spindelwelle ein schneller und einfacher Abbau des Spindelgehäuses vom Motorgehäuse erfolgen kann, wobei lediglich Gehäuseschrauben zu lösen sind. Der Spindelmotor selbst wird dabei in keiner Weise beeinträchtigt. Außerdem wird durch die axial verschiebbare Kopplung zwischen Motorwelle und Spindelwelle erreicht, dass der Antriebsmotor mit seinen Lagerstellen relativ einfach gegen axiale Schläge aufgrund von Kollisionen geschützt ist. Bei der Kollision kann sich die Spindelwelle axial verschieben, ohne dass dadurch Kräfte auf die Motorlagerung übergehen. Ein weiterer wesentlicher Vorteil besteht darin, dass beim Lösen des Spindelgehäuses vom Motorgehäuse die Werkzeugspanneinrichtung beziehungsweise deren Zugstange mit herausgezogen wird, ohne dass hierzu irgendwelche Demontagearbeiten erforderlich wären. Die verschleißanfälligsten Teile einer Motorspindel sind üblicherweise die Werkzeugspanneinrichtung, deren Federpaket in der Regel nach einer gewissen Anzahl von Spannhüben erneuert werden muss, und die Lagerung der Spindelwelle, die beim Bearbeitungsvorgang eines Werkzeugs am meisten beansprucht wird. Durch den einfachen und schnellen Abbau des Spindelgehäuses kann dieses zum einen vor Ort erfolgen, und zum anderen werden gleichzeitig alle besonders verschleißanfälligen Teile in einer Baueinheit abgenommen. An Ort und Stelle kann dann eine neue Baueinheit eingesetzt werden, ohne dass größere Justiervorgänge oder Auswuchtvorgänge erforderlich wären.

Durch die in den Unteransprüchen aufgeführten Maßnahmen sind vorteilhafte Weiterbildungen und Verbesserungen der im Anspruch 1 angegebenen Motorspindel möglich.

Die in Drehrichtung formschlüssige Kopplung zwischen Spindelwelle und Motorwelle, die eine gegenseitige axiale Verschiebung zulässt, ist in vorteilhafter Weise als Verzahnung ausgebildet, insbesondere als Zahnkranzverzahnung. Bevorzugt weist dabei die Motorwelle zur Spindelwelle hin einen Zahnkranzbereich mit Innenzahnung auf, in den eine Zahnnabe der Spindelwelle eingreift. Dies ermöglicht ein besonders einfaches und schnelles Entkoppeln und Auskoppeln durch Einschieben oder Herausziehen.

Eine Lagerstelle der Motorwelle im Motorgehäuse ist dabei zweckmäßigerweise zur Lagerung des Zahnkranzbereichs ausgebildet.

Weiterhin weist das Motorgehäuse bevorzugt an seiner vom Spindelgehäuse abgewandten Seite ein mit einer Lagerstelle für die Motorwelle versehenes Lagerschild auf.

Zur Steuerung beziehungsweise Regelung der Drehzahl der Motorspindel beziehungsweise des jeweiligen Bearbeitungswerkzeugs wirkt die Motorwelle mit einem Drehzahlgeber zusammen, der insbesondere an einem Lagerschild des Motorgehäuses angeordnet ist.Zur unabhängigen Lagerung von Motorwelle und Spindelwelle in ihren jeweiligen Gehäusen weist die Motorwelle im Motorgehäuse und die Spindelwelle im Spindelgehäuse zur Lagerung zweckmäßigerweise je wenigstens zwei Lagerstellen auf.

Das Spindelgehäuse ist bevorzugt an das Motorgehäuse angeschraubt, sodass zum Abnehmen des eine Baueinheit mit der Werkzeugspanneinrichtung bildenden Spindelgehäuses lediglich Gehäuseschrauben gelöst werden müssen.

Die Zugstange der Werkzeugspanneinrichtung weist am werkzeugaufnahmeseitigen Ende eine Spannhülse auf, die mit einer Werkzeugspannklaue zusammenwirkt, und weist am entgegengesetzten Ende einen Messabschnitt auf, der mit einer Positionssensorik zur Erfassung der axialen Position der Zugstange zusammenwirkt, insbesondere mit wenigstens einem berührungslos arbeitenden Positionssensor, um beim Herausziehen der Zugstange beim Abnehmen des Spindelgehäuses keine zusätzlichen Montagetätigkeiten vornehmen zu müssen.

In vorteilhafter Weise ist eine Betätigungseinheit zur Betätigung der Zugstange am vom Spindelgehäuse abgewandten Endbereich des Motorgehäuses angeordnet. Diese Betätigungseinheit kann ebenfalls in einfacher Weise durch Lösen von Halteschrauben abgenommen beziehungsweise ausgetauscht werden. Diese Betätigungseinheit enthält zweckmäßigerweise ein fluidisches Stellglied zur axialen Verschiebung der Zugstange.

Die Zugstange ist mit eine Spannkraft zum Festhalten eines jeweiligen Werkzeugs ausübenden Federmitteln versehen, die insbesondere an der Zugstange innerhalb der Motorwelle angeordnet sind, und die Betätigungseinheit ist zum Verschieben der Zugstange gegen die Federkraft der Federmittel zum Lösen des Werkzeugs ausgebildet. Dadurch wird das Werkzeug beziehungsweise die Werkzeugaufnahme bei nicht betätigter Betätigungseinheit durch Federkraft gehalten und kann durch Betätigung der Betätigungseinheit gelöst werden.

Ein Ausführungsbeispiel der Erfindung ist in der Zeichnung dargestellt und in der nachfolgenden Beschreibung näher erläutert. Es zeigen:

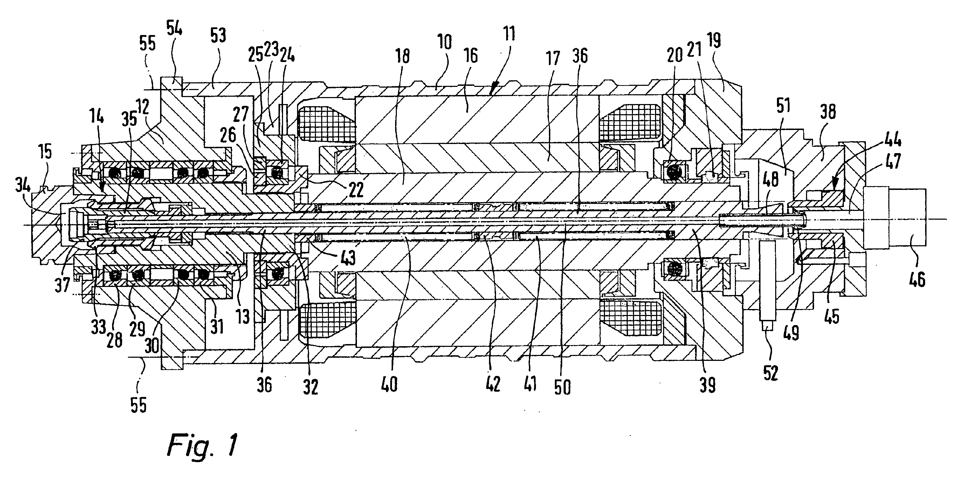

- Figur 1: eine Motorspindel als Ausführungsbeispiel der Erfindung im Längsschnitt und
- Figur 2: die aus Werkzeugspanneinrichtung und Spindelgehäuse bestehende Baueinheit in einer separaten Darstellung.

Die in den Figuren dargestellte Motorspindel weist eine Kompaktbauweise auf und dient zum Drehantrieb von Bearbeitungswerkzeugen an einer Werkzeugmaschine. Die Motorspindel besteht aus zwei miteinander verschraubbaren Gehäusen, nämlich einem Motorgehäuse 10 zur Aufnahme eines Spindelmotors 11 und einem Spindelgehäuse 12, das eine Spindelwelle 13 und eine Werkzeugspanneinrichtung 14 zum Festspannen eines Bearbeitungswerkzeugs oder einer ein solches Bearbeitungswerkzeug haltenden Werkzeugaufnahme 15 enthält.

Der Spindelmotor 11 im Motorgehäuse 10 weist einen äußeren Stator 16 und einen inneren Rotor 17 auf, der eine als Hohlwelle ausgebildete Motorwelle 18 umgreift und mit dieser fest verbunden ist. Das Motorgehäuse 11 ist an seinem vom Spindelgehäuse 12 entfernten Endbereich durch ein Lagerschild 19 abgeschlossen, das ein Wälzlager 20 zur Drehlagerung der Motorwelle 18 auf dieser einen Seite enthält. Weiterhin ist in diesem Lagerschild 19 ein Drehgeber 21 zur Erfassung der Drehzahl der Motorwelle 18 und damit des Spindelmotors 11 angeordnet.

Die Motorwelle 18 ist spindelgehäuseseitig fest mit einem rohrstückartigen Zahnkranzelement 22 verbunden, das eine Innenzahnung aufweist, die beispielsweise als Keilzahnung ausgebildet sein kann. Das Zahnkranzelement 22 und damit die entsprechende Seite der Motorwelle 18 ist an einem ringartigen Gehäusebereich 23 mittels eines weiteren Wälzlagers 24 gelagert. Das Wälzlager 24 liegt dabei umfangsseitig an einer ringartigen Lageraufnahme 25 an, die ein Zwischenstück zwischen dem Wälzlager 24 und dem ringartigen Gehäusebereich 23 bildet. Das Wälzlager 24 wird mittels zweier ringartiger Gewindeelemente 26, 27 am Zahnkranzelement 22 beziehungsweise an der Lageraufnahme 25 fixiert.

Die Spindelwelle 13 ist mit Hilfe von vier Wälzlagern 28-31 im Spindelgehäuse 12 drehbar gelagert. Die Zahl der Wälzlager 28-31, wie auch der Wälzlager 20,24 zur Lagerung der Motorwelle 18, kann selbstverständlich variieren, es sind jedoch jeweils mindestens zwei Lagerstellen erforderlich, um die beiden Wellen, nämlich die Spindelwelle 13 und die Motorwelle 18, unabhängig voneinander zu lagern.

Ein zylindrischer, dem Motorgehäuse 10 zugewandter Endbereich der Spindelwelle 13 ist als Zahnnabe 32 mit einer Umfangsverzahnung versehen, die in das Zahnkranzelement 22 der Motorwelle 18 eingreift und dadurch eine drehfeste Verzahnung zwischen Spindelwelle 13 und Motorwelle 18 bewirkt. Dabei ist die Zahnnabe 32 und damit die Spindelwelle 13 infolge dieser Verzahnung axial verschiebbar relativ zur Motorwelle 18 ausgebildet.

Die Werkzeugspanneinrichtung 14 in der Spindelwelle 13 besteht im Wesentlichen aus einer rohrartigen Werkzeugspannklaue 33, die in an sich bekannter Weise in eine Ausnehmung 34 der jeweiligen Werkzeugaufnahme 15 eingreift. Die Werkzeugspannklaue 33 umgreift dabei eine Spannhülse 35, die mittels einer damit fest verbundenen Zugstange 36 axial relativ zur Werkzeugspannklaue 33 verschiebbar ist. Die Spannhülse 35 besitzt endseitig einen im Durchmesser vergrößerten Spannkopf 37, der bei einer Axialbewegung der Zugstange 36 in Richtung des Motorgehäuses 10 die elastische Werkzeugspannklaue 33 innerhalb der Ausnehmung 34 radial nach außen drückt und dadurch die Werkzeugaufnahme 15 in der Spindelwelle 13 fixiert.

Die Zugstange 36 erstreckt sich von der Spindelwelle 13 aus durch die Motorwelle 18 hindurch und endet in einer Betätigungseinheit 38, die am Lagerschild 19 fixiert ist. Die axial in der Spindelwelle 13 verschiebbar geführte Zugstange 36 besitzt an ihrem vom Spindelgehäuse 12 entfernten Endbereich einen Ringabsatz 39, dessen Durchmesser geringfügig kleiner als der Innendurchmesser eines konzentrischen Längskanals durch die Motorwelle 18 ist, sodass der Ringabsatz 39 und damit die Zugstange 36 in diesem Längskanal und damit in der Motorwelle 18 frei verschiebbar geführt sind. Zwei Druckfederpakete 40, 41 umgreifen die Zugstange 36 ringscheibenartig und sind voneinander durch eine Stützscheibe 42 im mittleren Bereich der Motorwelle 18 voneinander getrennt. Diese beiden Druckfederpakete 40, 41 stützen sich einerseits am Ringabsatz 39 und andererseits über eine Anlegescheibe 43 an der Spindelwelle 12 ab, sodass die Spannhülse 35 durch die Kraft der beiden Druckfederpakete 40, 41 die Werkzeugspannklaue 33 auseinanderdrückt und dadurch die Werkzeugaufnahme 15 in der Spindelwelle 13 fixiert. Ein fluidisches, als Arbeitszylinder ausgebildetes Stellglied 44 in der Betätigungseinheit 38 besitzt einen fluidisch axial verschiebbaren Kolben 45, der bei einer Betätigung der Betätigungseinheit 38 gegen die Zugstange 36 bewegt wird und diese gegen die Federkraft der Druckfederpakete 40, 41 in Richtung des Spindelgehäuses 12 verschiebt. Dadurch wird die Spannhülse 35 aus der Werkzeugspannklaue 33 herausgedrückt, sodass die Werkzeugaufnahme 15 gelöst wird und herausgenommen werden kann. Kühl- und/oder Schmiermittel kann über eine Drehdurchführung 46 in einen mit der Zugstange 36 fluchtenden Kanal 47 im Inneren der Betätigungseinheit 38 gebracht werden. In diesen Kanal 47 greift ein endseitig an der Zugstange 36 fixiertes Röhrchen 48 ein, wobei das Röhrchen 48 umgreifende Dichtelemente 49 eine dichtende Verbindung des Kanals 47 mit dem Röhrchen 48 gewährleisten. Die Zugstange 36 ist rohrartig ausgebildet, sodass Kühl- und/oder Schmiermittel vom Röhrchen 48 aus durch einen konzentrischen Längskanal 50 in der Zugstange 36 zur Werkzeugspanneinrichtung 14 in der Spindelwelle 13 und damit zur Werkzeugaufnahme 15 und zum jeweiligen darin gehaltenen Bearbeitungswerkzeug gelangen kann.

Der sich aus der Motorwelle 18 in einen Hohlraum 51 der Betätigungseinheit 38 hineinerstreckende Endbereich der Zugstange 36 ist kegelartig ausgebildet und wirkt mit einem berührungslos arbeitenden Wegsensor 52 zusammen, um die Position der Zugstange 36 und damit den Spannzustand der Werkzeugspanneinrichtung 14 erfassen zu können. Andere bekannte Positionsmesseinrichtungen können hier selbstverständlich ebenfalls eingesetzt werden.

Das Motorgehäuse 10 besitzt spindelgehäuseseitig einen rohrstückartigen Endbereich 53, in den das Spindelgehäuse 12 zum Teil eingreift. Eine Ringflansch 54 des Spindelgehäuses 12 liegt an der Stirnseite dieses Endbereichs 53 an, wobei Befestigungsschrauben 55 zur Fixierung dieses Ringflansches 54 und damit des Spindelgehäuses 12 an diesem Endbereich 53 und damit am Motorgehäuse 10 dienen.

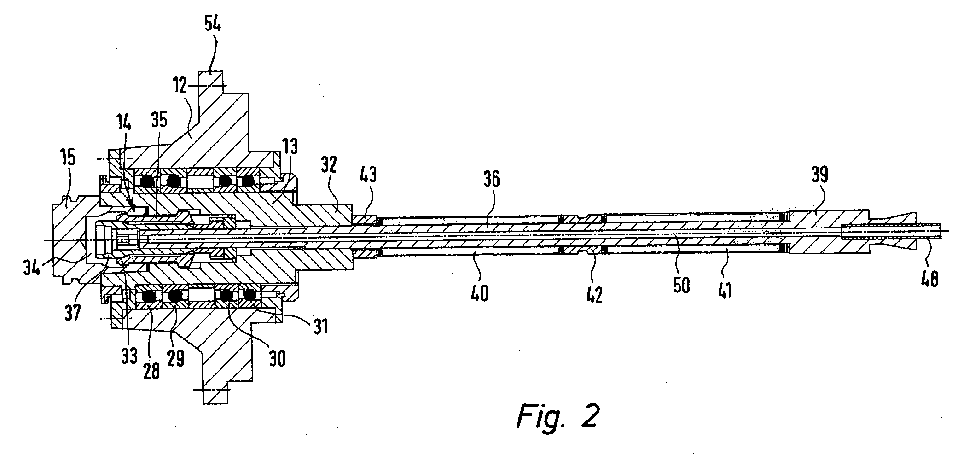

Zur Abnahme des Spindelgehäuses 12 werden die Befestigungsschrauben 55 gelöst, worauf dann das Spindelgehäuse 12 abgezogen werden kann. Dabei gleitet die Zahnnabe 32 aus dem Zahnkranzelement 22 und die Zugstange 36 mit den Druckfederpaketen 40, 41 aus der Motorwelle 18. Diese als Ganzes abnehmbare Baueinheit aus Spindelgehäuse 12 und Zugstange 36 ist in Figur 2 separat dargestellt. Durch die eigenständige Lagerung der Motorwelle 18 und damit des Spindelmotors 11 muss dieser somit zum Abnehmen dieser Baueinheit in keiner Weise demontiert oder verändert werden, und eine reparierte oder neue Baueinheit gemäß Figur 2 muss lediglich wieder eingeschoben und mittels der Befestigungsschrauben 55 fixiert werden. Dabei sind keinerlei größere Justier- oder Auswuchtvorgänge erforderlich.

## Patentansprüche

1. Motorspindel zum Drehantrieb von Werkzeugen an einer Werkzeugmaschine, mit einem eine Motorwelle (18) aufweisenden Spindelmotor (11) und einer von dieser angetriebenen, eine Werkzeugspanneinrichtung (14) besitzenden Spindelwelle (13) und mit einer sich von der Werkzeugspanneinrichtung (14) aus durch die Spindelwelle (13) und die Motorwelle (18) hindurch erstreckenden und darin axial verschiebbaren Zugstange (36) der Werkzeugspanneinrichtung (14) zum Festspannen von Werkzeugen oder Werkzeugaufnahmen (15), **dadurch gekennzeichnet, dass** die Motorwelle (18) unabhängig von der Spindelwelle (13) in einem Motorgehäuse (10) drehbar gelagert ist und die Spindelwelle (13) unabhängig von der Motorwelle (18) in einem Spindelgehäuse (12) drehbar gelagert ist, dass das Spindelgehäuse (12) lösbar am Motorgehäuse (10) befestigt ist und die Spindelwelle (13) in Drehrichtung formschlüssig, jedoch axial frei verschiebbar mit der Motorwelle (18) gekoppelt ist, und dass das Spindelgehäuse (12) eine eigenständige Baueinheit mit der Werkzeugspanneinrichtung (14) und deren Zugstange (36) bildet, wobei diese Zugstange (36) frei verschiebbar in der Motorwelle (18) angeordnet ist.

2. Motorspindel nach Anspruch 1, **dadurch gekennzeichnet, dass** die in Drehrichtung formschlüssige Kopplung zwischen Spindelwelle (13) und Motorwelle (18) als Verzahnung ausgebildet ist, insbesondere als Zahnkranzverzahnung.

3. Motorspindel nach Anspruch 2, **dadurch gekennzeichnet, dass** die Motorwelle (18) zur Spindelwelle (13) hin einen Zahnkranzbereich (22) mit Innenzahnung aufweist, in den eine Zahnnabe (32) der Spindelwelle (13) eingreift.

4. Motorspindel nach Anspruch 3, **dadurch gekennzeichnet, dass** eine Lagerstelle (24) der Motorwelle (18) im Motorgehäuse (10) zur Lagerung des Zahnkranzbereichs (22) ausgebildet ist.

5. Motorspindel nach einem der vorhergehenden Ansprüche, **dadurch gekennzeichnet, dass** das Motorgehäuse (10) an seiner vom Spindelgehäuse (12) abgewandten Seite ein mit einer Lagerstelle (20) für die Motorwelle (18) versehenes Lagerschild (19) aufweist.

6. Motorspindel nach einem der vorhergehenden Ansprüche, **dadurch gekennzeichnet, dass** die Motorwelle (18) mit einem Drehzahlgeber (21) zusammenwirkt, der insbesondere an einem Lagerschild (19) des Motorgehäuses (10) angeordnet ist.

7. Motorspindel nach einem der vorhergehenden Ansprüche, **dadurch gekennzeichnet, dass** die Motorwelle (18) im Motorgehäuse (10) und die Spindelwelle (13) im Spindelgehäuse (12) zur Lagerung je wenigstens zwei Lagerstellen (20, 24; 28-31) aufweist.

8. Motorspindel nach einem der vorhergehenden Ansprüche, **dadurch gekennzeichnet, dass** das Spindelgehäuse (12) an das Motorgehäuse (10) angeschraubt ist.

9. Motorspindel nach einem der vorhergehenden Ansprüche, **dadurch gekennzeichnet, dass** die Zugstange (36) am werkzeugaufnahmeseitigen Ende eine Spannhülse (35) aufweist, die mit einer Werkzeugspannklaue (33) zusammenwirkt, und am entgegengesetzten Ende einen Messabschnitt aufweist, der mit einer Positionssensorik (52) zusammenwirkt, insbesondere mit wenigstens einem berührungslos arbeitenden Positionssensor.

10. Motorspindel nach einem der vorhergehenden Ansprüche, **dadurch gekennzeichnet, dass** eine Betätigungseinheit (38) zur Betätigung der Zugstange (36) am vom Spindelgehäuse (12) abgewandten Endbereich des Motorgehäuses (10) angeordnet ist, insbesondere an dessen Lagerschild (19).

11. Motorspindel nach Anspruch 10, **dadurch gekennzeichnet, dass** die Betätigungseinheit (38) ein fluidisches Stellglied (44) zur axialen Verschiebung der Zugstange (36) enthält.

12. Motorspindel nach Anspruch 10 oder 11, **dadurch gekennzeichnet, dass** die Zugstange (36) mit eine Spannkraft zum Festhalten des jeweiligen Werkzeugs oder der jeweiligen Werkzeugaufnahme (15) ausübenden Federmitteln (40, 41) versehen ist, die insbesondere an der Zugstange (36) innerhalb der Motorwelle (18) angeordnet sind, und dass die Betätigungseinheit (38) zum Verschieben der Zugstange (36) gegen die Federkraft der Federmittel (40, 41) zum Lösen des Werkzeugs oder der Werkzeugaufnahme (15) ausgebildet ist.
